# EUROPEAN PATENT SPECIFICATION

(11) **EP 0 387 799 B1**
(45) Date of publication and mention of the grant of the patent: **10.05.1995**
(21) Application number: 90104739.9
(22) Date of filing: 13.03.1990
(51) Int. Cl.: G01T 1/40, G01T 1/208

(54) **Radiation measurement system**
Strahlungsmessvorrichtung
Système de mesure de rayonnement

(30) Priority: 14.03.1989 JP 61632/89
(43) Date of publication of application: 19.09.1990
(73) Proprietor: KABUSHIKI KAISHA TOSHIBA, Kawasaki-shi, Kanagawa-ken 210 (JP)
(72) Inventor: Kobayashi, Hiroaki, c/o Intellectual Property Div., Minato-ku, Tokyo 105 (JP)
(74) Representative: Blumbach, Kramer & Partner

(56) References cited:
- EP-A- 0 066 763
- GB-A- 2 068 533
- SU-A- 187 168

## Description

The present invention relates to a scintillation camera and more particularly it relates to an apparatus for controlling gain of the camera.

When radioactive radiation emitted from the inside of the human body enters into the scintillator, scintillation light is produced. This scintillation light is converted into electric signal and amplified by a predetermined gain by the photomultiplier tube (PMT). This electric signal is further amplified by a predetermined gain by the preamplifier and the like and outputted as output signal. Thereafter, information such as RI distribution relating to the light emitting position in the scintillator is obtained on the basis of the output signal, so that the shape, position, size and the like of the focus in the human body can be diagnosed.

It sometimes happens at the measurement process that PMT property changes with the lapse of time and that the gain of PMT therefore becomes low. In order to prevent this, gain of the preamplifier and the like are corrected and the level of output signal is adjusted to become certain in relation to the scintillation light of certain level. More specifically, a light-emitting diode is fixed to the glass tube of PMT. Standard light beam shot from the light-emitting diode is transmitted through the glass tube, introduced into the light receiving face of PMT and converted into standard signal. The gain correcting value of the preamplifier is obtained from this standard signal thereby to correct the gain of the preamplifier. The level of output signal is thus adjusted to become certain in relation to the standard light.

However, it is needed that the light-emitting diode is located in the resin layer between the glass tube and the circuit housing section in PMT. The light-emitting diode is thus covered by a cylindrical member made of opaque resin and then embedded in the resin layer. This makes it impossible for the standard light beam to be transmitted through the opaque cylindrical member. In other words, the opaque cylindrical member is low in light transmission efficiency and it sometimes happens therefore that the standard light beam having a sufficient quantity of light cannot be supplied to the light receiving face of PMT. Further, it is likely to happen that the light-emitting diodes are attached to the glass tube at different angles. As this diode-attaching angle relative to the glass tube becomes larger, therefore, the transmission of the standard light beam is disturbed more and more by the opaque cylindrical member. As the result, the standard light beam is less supplied to the light receiving face of PMT. Because the standard light beam is not sufficiently supplied to the light receiving face of PMT, as described above, the gain of the preamplifier cannot be accurately adjusted.

A scintillation camera in accordance with the first part of the independent Claim of this application is known from EP-A-0 066 763. The device disclosed in this document comprises an LED used as standard light source emitting light onto the light receiving surface of the PMT. This LED is, however, fixed adjacent the light receiving surface by an additional fixing material.

A further device using a standard light source is disclosed in GB-A-2 068 533. In this device, an LED is arranged on a solid glass member between the photomultiplier and the scintillation crystal.

The object of the present invention is to provide a radiation measurement system capable of supplying the standard light beam, ample in quantity of light, to the light receiving face of a converter means (or PMT) to enable gain adjustment to be accurately carried out.

According to the present invention, there is provided a radiation measurement system according to Claim 1.

According to the present invention, a means for attaching a standard light beam generating means to a converting means is made of light-penetrating or transparent material. Therefore, the standard light beam can be transmitted through the attaching means. In other words, the light transmitting efficiency of the attaching means is so improved as to enable the standard light beam to be supplied to the light receiving face of the converting means (or PMT) with ample quantity of light. Further, the attaching means is made of transparent material. Even when the attaching angle of the beam generating means is changed, therefore, the transmission of the standard light beam is not disturbed by the attaching means, thereby enabling the quantity of the standard light beam supplied to the light receiving face to be kept almost certain. As apparent from the above, ample quantity of the standard light beam can be supplied to the light receiving face of the converting means (or PMT) so that gain adjustment can be accurately achieved.

This invention can be more fully understood from the following detailed description when taken in conjunction with the accompanying drawings, in which:
Fig. 1 is a sectional view showing an example of the scintillation camera according to the present invention;
Fig. 2 is a sectional view showing an arrangement of attaching a light-emitting diode to PMT shown in Fig. 1;
Fig. 3 is an exploded perspective view showing the diode attaching arrangement;
Fig. 4 is intended to explain the angle at which the light-emitting diode is attached to PMT;
Fig. 5 is a graph showing the relation of the diode attaching angle relative to the light quantity of the standard light beam incident onto PMT;
Fig. 6 is a sectional view showing another arrangement of attaching the light-emitting diode to PMT;
Fig. 7 is a perspective view showing the diode attaching arrangement in Fig. 6 dismantled;
Fig. 8 is a block diagram showing a circuit for the radiation measurement system;
Fig. 9 shows a waveform of the standard light beam produced by the light-emitting diode;
Fig. 10 shows a two-dimensional array of photomultiplier tubes; and
Fig. 11 is intended to explain offset detection.

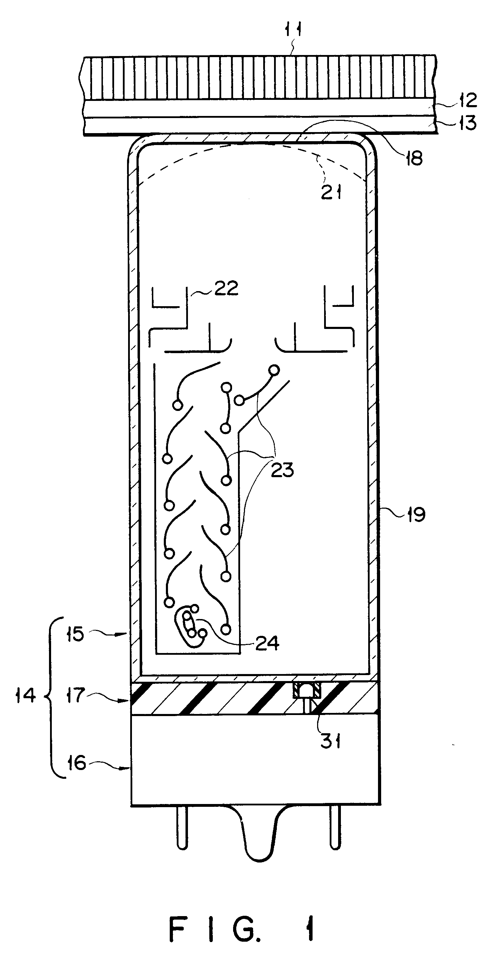

Fig. 1 shows an example of the scintillation camera according to the present invention. This scintillation camera includes collimator 11, scintillator 12, light guide 13 and photomultiplier tube (PMT) 14. PMT 14 has vacuum tube section 15 for photoelectrically converting scintillation light, section 16 for housing a circuit for carrying out electric processes such as amplifying process, and resin layer 17 interposed between vacuum tube section 15 and circuit housing section 16. PMT 14 shown in Fig. 1 is of the head-on (or end-on) type but the present invention can be applied to the PMT of the side-on type.

When radioactive radiation emitted from the inside of the human body enters into scintillator 12 through collimator 11, scintillation light is created. When this scintillation light is introduced into light receiving face 18 at vacuum tube section 15 of PMT 14 through light guide 13, photoelectrons are discharged by photocathode 21. Photoelectrons are accelerated and focused by focusing electrode 22 and then introduced into a plurality of dynodes 23. Secondary electrons are discharged and amplified by these dynodes 23 and after this amplification is repeated, output is picked up by anode 24. This output of the PMT is applied to a preamplifier, which includes an auto-gain controller and the like, and amplified by a predetermined gain. Output signal of the preamplifier is then applied to an image processing section where information such as RI distribution relating to the light-emitting position in the scintillator is obtained.

It sometimes happens at the measurement process that the gain of the PMT becomes low. In order to prevent this, the gain of the preamplifier is corrected and the level of output signal of the preamplifier is adjusted to become certain relative to the scintillation light of certain level. The scintillation camera according to the present invention includes a means for controlling the gain of the preamplifier.

More specifically, light-emitting diode 31 having semispherical light emitting face and shooting a standard light beam of high directivity is located in resin layer 17 of PMT 14. The standard light beam shot from light-emitting diode 31 is transmitted through glass tube 19 at vacuum tube section 15, introduced into light receiving face 18 of PMT 14, and converted into standard signal. The gain correcting value of the preamplifier is obtained from this standard signal. As the result, the gain of the preamplifier is corrected. The level of output signal is thus adjusted to become certain relative to the standard light.

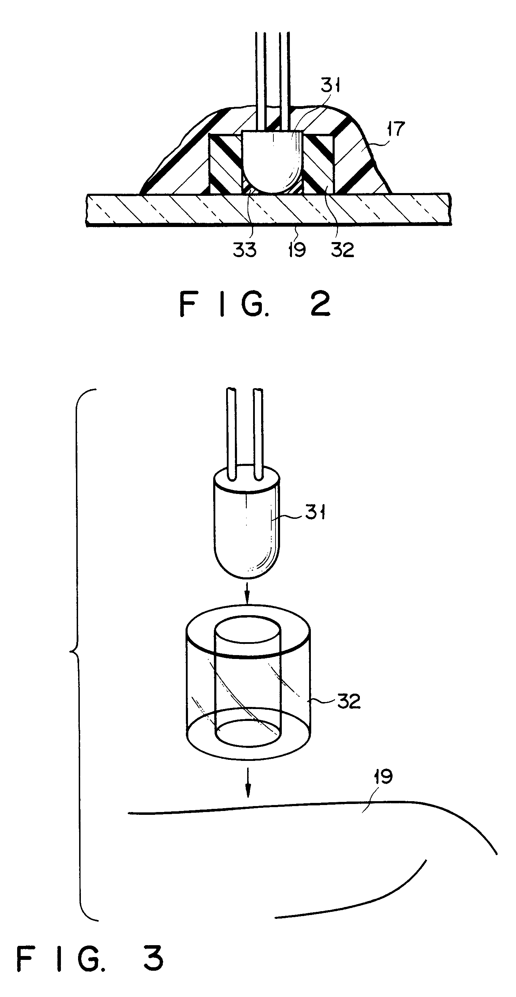

According to the present invention, the light emitting end of light-emitting diode 31 is inserted into cylindrical member 32 made of transparent resin such as acrylic resin and this cylindrical member 32 is embedded in resin layer 17 according to the molding process, as shown in Figs. 2 and 3. Further, that internal space in cylindrical member 32 which is defined by the light emitting end of diode 31 and glass tube 19 of PMT 14 is filled with transparent filler 33 having bonding effect, preferably optical adhesive.

As described above, cylindrical member 32 is made of transparent resin and the internal space in cylindrical member 32 is filled with transparent filler 33. The standard light beam can be thus transmitted through cylindrical member 32 and transparent filler 33. In short, their light transmitting efficiencies are better improved so that the ample quantity of standard light beam can be supplied to light receiving face 18 of PMT 14.

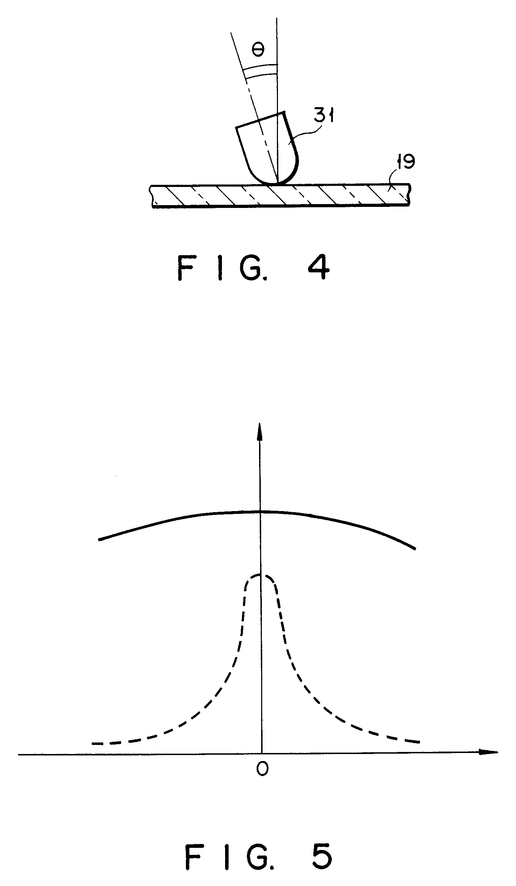

As shown in Fig. 4, it sometimes happens that angle ϑ of attaching light-emitting diodes 31 to glass tube 19 is not always certain. As angle ϑ becomes larger, the light quantity of the standard light beam entering into light receiving face 18 is made smaller, as seen in the conventional case in Fig. 5.

According to the present invention, however, cylindrical member 32 is made of transparent resin and the internal space in cylindrical member 32 defined by the light emitting end of diode 31 and glass tube 19 is filled with transparent filler 33. Even when angle ϑ become large, therefore, the transmission of the standard light beam is not disturbed by cylindrical member 32 and transparent filler 33 so that the light quantity of the standard light beam supplied to light receiving face 18 of PMT 14 can be kept certain or less uncertain.

As apparent from the above, the present invention enables the ample quantity of standard light beam to be supplied to light receiving face 18 of PMT 14. Gain adjustment can be accurately attained accordingly.

Resin layer 17 may be made of transparent resin.

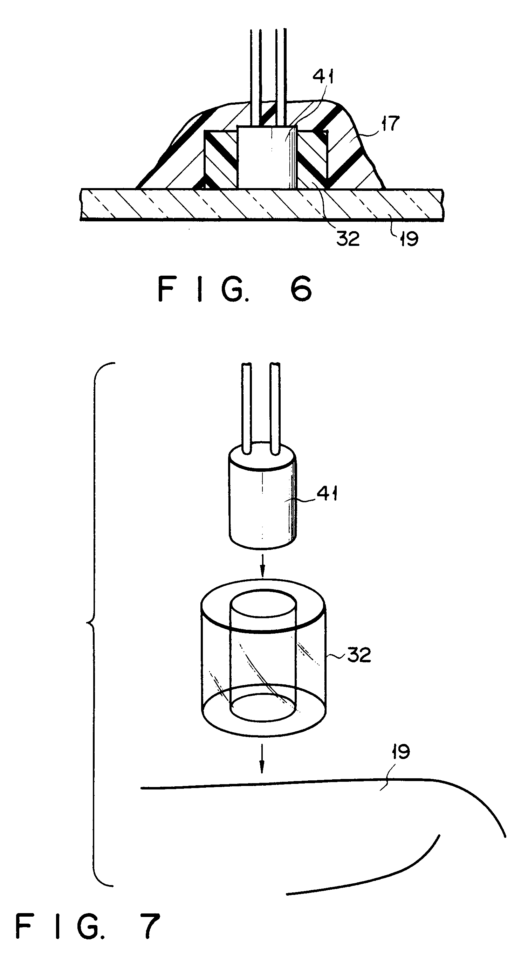

Figs. 6 and 7 show another embodiment of the present invention. Light-emitting diode 41 has a flat light-emitting end face and shoots standard light beam of low (or wide) directivity.

When light-emitting diode 41 is attached to glass tube 19, therefore, the positioning of light-emitting diode 41 can be accurately attained. In addition, light-emitting diode 41 can be easily attached to glass tube 19 at a predetermined angle. The uncertainness of the incident light quantity of the standard light beam caused by the uncertainness of attaching angle ϑ can be kept far less accordingly.

Further, light-emitting diode 41 shoots a standard light beam which is low (or wide) in directivity. Therefore, the standard light beam is more diffusable, as compared with the case where a light beam with high directivity is shot. The transmitting efficiency of the standard light beam can be developed.

A concrete example of the gain control device will be briefly described. In this device, gain adjustment will be carried out while radiation is being measured, but it may be carried out at the time when radiation is not being measured. Offset correction will be briefly described, too.

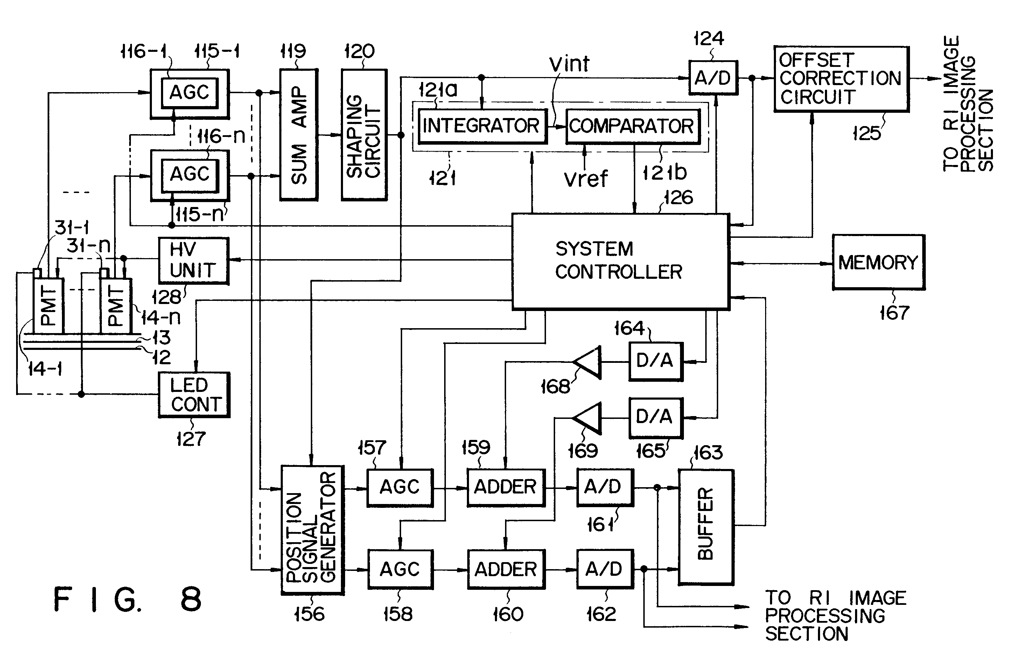

Referring now to Fig. 8, there is illustrated a gain control system.

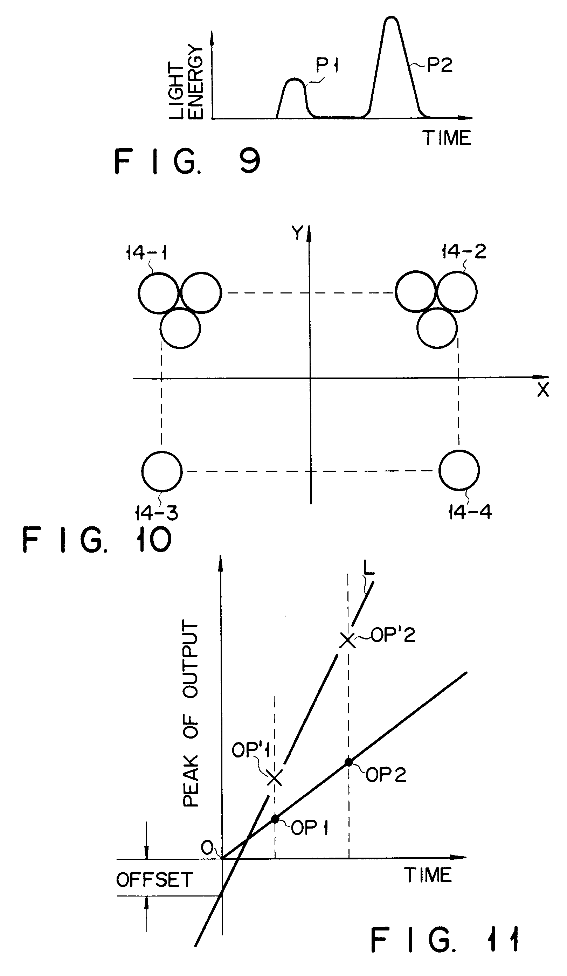

Standard lights produced by LEDs 31-1 to 31-n are directed to PMTs 14-1 to 14-n which are driven by an HV unit 128. LEDs 31-1 to 31-n each produce two types of standard lights P1 and P2, which are different from each other in quantity of light, under the control of LED controller 127, as shown in Fig. 9. A scintillator 12 produces scintillations in response to incidence of radiation thereto. A light 13 directs the produced scintillations to PMTs 14-1 to 14-n.

Fig. 10 shows a two-dimensional array (X direction, Y direction) of PMTs 14-1 to 14-n. LEDs 31-1 to 31-n are placed at PMTs 14-1 to 14-n, respectively. Alternatively, for example, LEDs 31-1 to 31-4 may be placed near PMTs 14-1 to 14-4 that are located at the four corners of the PMT array comprised of PMTs 14-1 to 14-n. LEDs 31-1 to 31-n produce light of a spectrum that is close to the optical spectrum of scintillator 12, for example, green light, as standard light. LEDs 31-1 to 31-n are driven by current pulses having predetermined duty ratio from LED controller 127.

Preamplifiers 115-1 to 115-n are associated with PMTs 14-1 to 14-n and have automatic gain control (AGC) circuits 116-1 to 116-n, respectively. The gains of preamplifiers 115-1 to 115-n each have controlled by system controller 126 comprised of, for example, a central processing unit (CPU). Output signals of preamplifiers 115-1 to 115-n are applied to a shaping circuit 120 via a summing amplifier 119.

A/D converter 124 converts an analog signal outputted from shaping circuits 120 to a digital signal, and applies the digital signal to an offset correction circuit 125. Offset correction circuit 125 corrects the offset of the digital signal, i.e., measured data for radiation in accordance with an offset correction value.

A method of calculating the offset correction value will be described at this point.

When standard lights P1 to P2 fall on PMT 14-1 to 14-n at different points of time, peak values of corresponding output signals of A/D converter 124 in case where no offset occurs are assumed to be OP1 to OP2, respectively, in the graph of Fig. 11. It is assumed here that the peak values for standard lights P1 and P2 are adjusted such that a straight line connecting OP1 and OP2 together passes through the origin O. When PMTs 14-1 to 14-n are irradiated with standard lights P1 and P2 again after the lapse of a predetermined time, if the output peak values of A/D converter 124 were shifted to OP1′ and OP2′, then a straight line L connecting OP1′ and OP2′ would not pass through the origin O. The deviation of straight line L with respect to the origin O corresponds to the quantity of offset. The offset correction value is used for correcting the deviation.

System controller 126 calculates a gain correction value in accordance with an output signal of A/D converter 124 obtained when PMTs 14-1 to 14-n are irradiated with the standard light. The gains of preamplifiers 115-1 to 115-n are controlled in accordance with the gain correction value so that the gains to PMTs 14-1 to 14-n are controlled indirectly. System controller 126 calculates also the above offset correction value. The PMTs generally have statistical fluctuations. Thus, several measurements of the standard light and calculation of an arithmetic mean of measured data will allow the gain correction value and the offset correction value to be improved in accuracy. It is to be noted that the measurement of the standard light is performed during radiation measurement under the control of system controller 126.

Superimposed-light detector 121 detects incidence of scintillations to PMTs 14-1 to 14-n during measurement of the standard light. The detection of scintillations is performed by monitoring output signals of shaping circuit 120. Superimposed-light detector 121 is composed of an integrator 21a for integrating an output signal of shaping circuit 120 until a predetermined period of time lapses from the emission of the standard light and a comparator 121b for comparing an output voltage Vint of integrator 121a with a reference voltage Vref. When Vint > Vref in comparator 121b, that is, when the standard light and the scintillations fall on PMTs 14-1 to 14-n simultaneously within a predetermined time period, superimposed-light detector 121 outputs an inhibit signal to system controller 126. Upon receipt of the inhibit signal system controller 126 inhibits the operation of A/D converter 124. In other words, when the standard light and the scintillations fall on PMTs 14-1 to 14-n, the output signal of A/D converter 124 is not utilized for the offset and gain correction.

On the other hand, output signals of PMTs 14-1 to 14-n, amplified in preamplifiers 115-1 to 115-n are applied to a position signal generator 156. Position signal generator 156 calculates a position of incidence of radiation on the PMTs on the basis of the output signals of preamplifiers 115-1 to 115-n and provides position signals representing the position of incidence to AGC circuits 157 and 158. The position signals include an X signal and a Y signal.

AGC circuits 157 and 158 corrects the gains of the position signals output from position signal generator 156. The gain correction is performed by gain correction signals representing gain correction values output from system controller 126.

Adders 159 and 160, each of which may be comprised of an operational amplifier, add offset correction signals representing offset correction values to output signals of AGC circuits 157 and 158, that is, the gain-corrected position signals.

A/D converters 161 and 162 converts analog signals output from adders 159 and 160 to digital signals. Digital signals output from A/D converters 161 and 162 when the standard light is emitted are applied to system controller 126 via a buffer 163. On the other hand, radiation measured data is applied to an RI image processor (not shown) to be used for formation of an RI image.

System controller 126 is responsive to the output signal of buffer 163 to produce the gain correction signal and the offset correction signal.

The gain correction signal is used for correcting variations in gain in the X and Y directions and obtained by making a comparison between the position signal output from buffer 163 and an initial position signal which is previously set and changing a difference resulting from the comparison to a gain variation. The gain correction signal is applied to AGC circuits 157 and 159.

The offset correction signal is used for correcting variations in offset in the X and Y directions and obtained by making a comparison between the position signal output from buffer 163 and an initial position signal which is previously set and changing a difference resulting from the comparison to an offset variation. The offset correction signal output from system controller 126 is converted to analog signals by D/A converters 164 and 165 and then applied to adders 159 and 160 via buffers 168 and 169.

It is to be noted here that the initial position signal is a position signal obtained at the time of the first emission of the standard light and is stored in a memory 167.

## Claims

1. A scintillation camera, comprising a scintillator (12) responsive to the incidence of radiation to produce scintillation light, converting means (14) having a light-receiving surface (18) and a glass tube (19) connected to the light-receiving surface, and converting scintillation light received through the light-receiving surface into an electric signal, amplifying means for amplifying the electric signal by a predetermined gain, standard light beam generating means (31, 41) for generating a standard light beam and directing the light beam toward the light-receiving surface, calculating means for calculating a gain correction value in accordance with a standard signal received from said converting means (14) in response to the incidence of said standard light beam, and mounting means for mounting said standard light beam generating means (31) in said converting means (14),
characterized in that:
said mounting means includes a cylindrical member (32), arranged on the glass tube (19), having an internal space for housing said standard light beam generating means (32, 34), and formed of a material for transmitting the standard light beam therethrough to the light-receiving surface, and a filler (33), located in the internal space, for securing said standard light beam generating means (31, 41) in the internal space with accurate positioning and alignment, and formed of a material for transmitting the standard light beam therethrough to the light-receiving surface, and
said mounting means includes a resin layer (17) for securing the cylindrical member (32) to the glass tube (19) opposite to said light-receiving surface (18).

2. A scintillation camera according to claim 1, characterized in that said converting means (14) includes a photomultiplier tube.

3. A scintillation camera according to claim 1, characterized in that said standard light beam generating means (31, 41) includes a light emitting diode.

4. A scintillation camera according to claim 3, characterized in that said light-emitting diode (31) includes a semishperical light-emitting end face and produces a light beam with high directivity.

5. A scintillation camera according to claim 3, characterized in that said light-emitting diode (41) includes a flat light-emitting end face and produces a light beam with low directivity.

## Patentansprüche

1. Szintillationskamera, umfassend:
einen Szintillator (12), der auf auftreffende Strahlung anspricht, um Szintillationslicht zu erzeugen,
eine Wandlereinrichtung (14) mit einer Lichtempfangsfläche (18) und
einer mit der Lichtempfangsfläche verbundenen Glasröhre (19), welche das über die Lichtempfangsfläche empfangene Szintillationslicht in ein elektrisches Signal umwandelt,
eine Verstärkereinrichtung zum Verstarken des elektrischen Signals mit einem vorbestimmten Verstärkungsgrad, eine Standardlichtstrahlerzeugungseinrichtung (31, 41) zum Erzeugen eines Standardlichtstrahls und zum lenken des Lichtstrahls auf die Lichtempfangsfläche,
eine Berechnungseinrichtung zum Berechnen eines Verstärkungsgradkorrekturwerts nach Maßgabe eines von der Wandlereinrichtung (14) ansprechend auf das Auftreffen des Standardlichtstrahls empfangenen Standardsignals, und
eine Montageeinrichtung zum Anbringen der Standardlichtstrahlerzeugungseinrichtung (31) in der Wandlereinrichtung (14),
dadurch **gekennzeichnet,** daß
die Montageeinrichtung ein zylindrisches Glied (32) enthält, welches an der Glasröhre (19) angeordnet ist, einen Innenraum zur Aufnahme der Standardlichtstrahlerzeugungseinrichtung (32, 34) aufweist, und aus einem Material zum Durchlassen des Standardlichtstrahls durch die Lichtempfangsfläche ausgebildet ist, und einen Füller (33) besitzt, der in dem Innenraum angeordnet ist, um die Standardlichtstrahlerzeugungseinrichtung (31, 41) in dem Innenraum mit genauer Positionierung und Ausrichtung festzulegen, und der aus einem Material gebildet ist, welches den Standardlichtstrahl zu der Lichtempfangsfläche durchläßt, und
die Montageeinrichtung eine Harzschicht (17) zum Festlegen des zylindrischen Gliedes (32) an der Glasröhre (19) gegenüber der Lichtempfangsfläche (18) enthält.

2. Szintillationskamera nach Anspruch 1, dadurch **gekennzeichnet**, daß die Wandlereinrichtung (14) eine Photoelektronenvervielfacherröhre enthält.

3. Szintillationskamera nach Anspruch 1, dadurch **gekennzeichnet**, daß die Standardlichtstrahlerzeugungseinrichtung (31, 41) eine Leuchtdiode aufweist.

4. Szintillationskamera nach Anspruch 3, dadurch **gekennzeichnet**, daß die Leuchtdiode (31) eine halbkugelförmige lichtemittierende Stirnfläche aufweist und einen Lichtstrahl mit hoher Richtwirkung erzeugt.

5. Szintillationskamera nach Anspruch 3, dadurch **gekennzeichnet**, daß die Leuchtdiode (41) eine flache lichtemittierende Stirnfläche aufweist und einen Lichtstrahl mit geringer Richtwirkung erzeugt.

## Revendications

1. Caméra à scintillations comprenant un scintillateur (12) qui répond à l'incidence d'un rayonnement en produisant une lumière de scintillation, un moyen de conversion (14) qui possède une surface (18) de réception de lumière et un tube de verre (19) connecté à la surface de réception de lumière, et qui convertit la lumière de scintillation reçue à travers la surface de réception de lumière en un signal électrique, un moyen d'amplification servant à amplifier le signal électrique avec un gain prédéterminé, un moyen générateur de faisceau lumineux normal (31, 41) servant à produire un faisceau lumineux normal et à diriger le faisceau lumineux vers la surface de réception de lumière, un moyen de calcul servant à calculer une valeur de correction de gain en fonction d'un signal normal reçu de la part dudit moyen de conversion (14) en réponse à l'incidence dudit faisceau lumineux normal, et un moyen de montage servant à monter ledit moyen générateur de faisceau lumineux normal (31) dans ledit moyen de conversion (14),
caractérisée en ce que :
ledit moyen de montage comporte un élément cylindrique (32), disposé sur le tube de verre (19), possédant un espace interne destiné à loger ledit moyen générateur de faisceau lumineux normal (32, 34), et formé d'un matériau permettant de transmettre le faisceau lumineux normal, à travers lui-même, jusqu'à la surface de réception de lumière, et une matière de remplissage (33), placée dans l'espace interne, qui sert à fixer ledit moyen générateur de faisceau lumineux normal (31, 41) dans l'espace interne selon un positionnement et un alignement précis, et qui est formé d'un matériau permettant de transmettre le faisceau lumineux normal, à travers lui-même, jusqu'à la surface de réception de lumière, et
ledit moyen de montage comporte une couche de résine (17) servant à fixer l'élément cylindrique (32) au tube de verre (19) en regard de ladite surface de réception de lumière (18).

2. Caméra à scintillations selon la revendication 1, caractérisée en ce que le moyen de conversion (14) est un tube photomultiplicateur.

3. Caméra à scintillations selon la revendication 1, caractérisée en ce que ledit moyen générateur de faisceau lumineux normal (31, 41) comporte une diode d'émission de lumière.

4. Caméra à scintillations selon la revendication 3, caractérisée en ce que ladite diode d'émission de lumière (31) comporte une face terminale d'émission de lumière semi-sphérique et produit un faiscau lumineux présentant une grande directivité.

5. Caméra à scintillations selon la revendication 3, caractérisée en ce que ladite diode d'émission de lumière (41) comporte une face terminale d'émission de lumière plate et produit un faisceau lumineux ayant une faible directivité.
